# EUROPÄISCHE PATENTSCHRIFT

(11) **EP 1 060 073 B1**
(45) Veröffentlichungstag und Bekanntmachung des Hinweises auf die Patenterteilung: **11.02.2004**
(21) Anmeldenummer: 98961223.9
(22) Anmeldetag: 19.11.1998
(51) Int. Cl.: B32B 3/10, G10K 11/162

(54) **SCHICHTSTOFF**
LAMINATE
STRATIFIE

(30) Priorität: 03.03.1998 DE 29803674 U
(43) Veröffentlichungstag der Anmeldung: 20.12.2000
(73) Patentinhaber: Faist Automotive GmbH & Co. KG, 86369 Krumbach (DE)
(72) Erfinder: PFAFFELHUBER, Klaus, D-89312 Günzburg (DE)
(74) Vertreter: Müller, Hans-Jürgen, Dipl.-Ing.
(86) Internationale Anmeldenummer: PCT/EP1998/007435
(87) Internationale Veröffentlichungsnummer: WO 1999/044816

(56) Entgegenhaltungen:
- DE-A- 2 438 987
- DE-A- 3 117 368
- DE-U- 29 617 845
- FR-A- 2 504 520

## Beschreibung

Die Erfindung bezieht sich auf einen akustisch wirksamen Schichtstoff mit einer Deckschicht und mit einer Schwerschicht sowie einer porösen Abstandschicht zwischen Deckschicht und Schwerschicht.

Ein derartiger Schichtstoff ist bereits bekannt (DE 31 17 368 A1). Bei dem bekannten Schichtstoff besteht die poröse Abstandschicht aus einem Polymerschaum aus beispielsweise Polyurethan (PUR), die ggf. mit Kammern in Form von nach einer Seite offenen Hohlräumen versehen ist. Hierdurch wirkt sie als Schallwellen absorbierende Absorberschicht. An der den Kammern abgewandten Seite befindet sich die Schwerschicht aus beispielsweise PVC, PUR oder Butylkautschuk, die an ihrer freien Oberfläche ggf. noch mit einer Deckschicht versehen sein kann. Derartige Schichtstoffe werden zur Lärmdämmung und Lärmdämpfung beispielsweise von Kabinenverkleidungen im Schwerbau der Industrie, im Bergbau und in Transportgeräten verwendet.

Auch ist bereits ein als schallabsorbierende Mehrschichtplatte ausgebildeter Schichtstoff bekannt (DE-A-24 38 987), bei der eine Kernschicht aus Schaumstoff zur Formstabilisierung, d.h. Erhöhung der Biegesteifigkeit, beidseitig mit Deckschichten kraftschlüssig verbunden ist. Dabei kann eine der Deckschichten gelocht sein, um den Schalleintritt in die geschäumte Kernschicht zu verbessern.

Darüber hinaus ist ein anderer Schichtstoff ähnlicher Art bekannt (EP 0 640 951 A2), bei der die Schwerschicht als Trägerschicht für den gesamten Schichtstoff ausgebildet ist. Die schwere Füllstoffe aufweisende Trägerschicht schließt in der Abstandschicht gebildete.Kammern nach außen ab. Die entgegengesetzte Seite der Abstandschicht ist mit einer dünnen Abdeckfolie abgedeckt, welche nach Art einer dünnen Membrane dort auftreffende Schallwellen in die als Absorber wirkende Abstandschichten weiterleitet.

Bei einem anderen ähnlichen Schichtstoff (EP 0 234 559 A3) wird die Abstandschicht auf das Blech einer Fahrzeugkarosserie aufgelegt.

Darüber hinaus ist es bekannt (DE 36 01 204 A1 und 42 11 409 A1), bei einer geräuschdämmenden Verkleidung des Motorraums von Kraftfahrzeugen, Faserstoffe als Absorberschicht zu verwenden und die Verkleidung zum Motorraum hin mit einer Aluminiumfolie zu kaschieren.

Der Erfindung liegt die Aufgabe zugrunde, einen Schichtstoff dieser Gattung hinsichtlich Herstellbarkeit, akustischer Wirksamkeit - im Sinne verbesserter Schalldämpfung, Schalldämmung und Schallabsorption - und möglichst auch hinsichtlich Entsorgbarkeit und Montierbarkeit sowie Demontierbarkeit zu verbessern.

Die Erfindung ist im Anspruch 1 gekennzeichnet, und in Unteransprüchen sind weitere Ausbildungen der Erfindung beansprucht. Darüber hinaus werden anhand der Figuren besonders bevorzugte Ausbildungen erläutert.

Bei der Erfindung ist die Deckschicht mit einer zahlreiche Durchbrechungen aufweisenden Löcherstruktur versehen. Besonders vorteilhaft ist es, wenn die Deckschicht durch Vertiefungen und/oder Erhöhungen auch eine Profilstruktur aufweist. Außerdem sind die Einzelschichten des Schichtstoffs, das heißt die Deckschicht, die Abstandschicht und die Schwerschicht, zu einer verhältnismäßig eigensteifen, aber dennoch in gewissem Umfang biegbaren Schichtstoffplatte verpreßt und/oder verschmolzen, so daß der Schichtstoff nicht mit zusätzliche Einzelschichten zusammenhaltenden Rahmenteilen, Nieten, Nähten oder dgl. zusätzlichen Verbindungselementen versehen sein muß.

Die Abstandschicht stellt einen ausreichenden Abstand zwischen der perforierten Deckschicht und der Schwerschicht her und gestattet Schallwellen aufgrund ihrer porösen und nicht zu stark verdichteten Beschaffenheit den Durchtritt zur Schwerschicht.

Es empfiehlt sich, wenn die Deckschicht aus einer Aluminiumfolie einer Schichtdicke zwischen 0,05 und 0,5 mm besteht. Es kann auch eine zusätzliche Abdeckschicht an der entgegengesetzten Oberfläche des Schichtstoffs, das heißt an der freien Oberfläche der Schwerschicht in Form einer Vliesschicht verwendet werden. Bei der Anwendung einer Aluminiumfolie empfiehlt es sich, diese mit einer dünnen Thermoplastschicht insbesondere aus Polypropylen (PP) oder Polyester (PES) zu versehen, um die flächige Verbindung zur Abstandschicht zu verbessern. Wird für die Abstandschicht Polyurethanschaum verwendet, kann eine solche zusätzliche verbindende Thermoplastschicht entfallen.

Die Löcherstrukturierung der Deckschicht kann vor dem Verbinden mit den übrigen Schichten erfolgen. Bei vielen Anwendungsfällen ist es jedoch vorteilhafter, die Löcherstrukturierung und ggf. die Profilstruktur der Deckschicht beispielsweise mittels Prägewerkzeugen und ggf. kleinen Lochstempeln zur Herstellung von Durchbrechungen erst nach dem Verbinden oder zweckmäßigerweise während des Verbindungsvorgangs herzustellen. Es hat sich gezeigt, daß die gleichzeitige Mitverformung von sich unter der Deckschicht befindlichen Schichtteilen die akustische Wirksamkeit gar nicht wesentlich beeinträchtigt, sondern sogar zu noch besseren Schalldämmungen und Schalldämpfungen in bestimmten Frequenzbereichen führt. Außerdem läßt sich das Herstellungsverfahren hierdurch oft wesentlich vereinfachen, so daß die Herstellungskosten reduziert werden können. Ein weiterer Vorteil der bleibenden Verformung der Deckschicht in die zahlreiche Löcher und/oder Vertiefungen aufweisende Struktur besteht darin, daß diese auch nach der Herstellung des Gesamtschichtstoffs einfacher biegbar, das heißt an die Konfigurationen anpaßbar ist, an denen sie als Schallenergie-Absorberschicht angebracht werden soll, ohne daß die Formstabilität und daher auch Formsteifigkeit zu wünschen übrigläßt. Insofern trägt die Strukturierung der Deckschicht in Verbindung mit dem Verpressen oder Verschmelzen der Einzelschichten zu einem integrierten einstückigen Bauelement sehr wesentlich bei.

Unter der "Schwerschicht" wird eine solche Schicht verstanden, welche durch schwere Füllmittel, wie Schwerspat (BaSO₄), wesentlich schwerer gemacht ist als ohne solche schweren Füllstoffe. Dabei kann die Schwerschicht durchaus auch aus PUR-Schwerschaum bestehen. Für viele Fälle empfiehlt sich jedoch die Verwendung einer Schwerfolie aus beispielsweise folgendem Material:
1. Kunststoffolie auf Basis Copolymer Ethylen/Vinylacetat
2. Kunststoffolie auf Basis Copolymer Ehtylen/Octen
3. Kunststoffolie auf Basis Terpolymer Ethylen/Propylen-Dien.

Besonders günstig ist es, wenn das Material der Schwerschicht so durch konstruktive Gestaltung modifiziert wird, daß sie zusätzlich die Aufgabe einer Absorberschicht und/oder Abstandschicht übernimmt: Zu diesem Zweck sollte die Schwerschicht derart verformt sein, daß sie die Funktion einer Abstandschicht mit übernimmt.

Für die Abstandschicht kann auch eine Vliesschicht verwendet werden, deren Fäden aus Kunststoff, wie Polystyrol, aus Naturstoff, wie Baumwolle, aus Metall, wie Aluminium und/oder Edelstahl und/oder aus Glas bestehen. Die Abstandschicht kann auch eine Weichschaumschicht aus beispielsweise PUR-Weichschaum sein. Sie soll genügend porös bzw. offenporig sein, um Schall hindurchzulassen.

In der Zeichnung werden Ausführungsbeispiele schematisch dargestellt und im folgenden näher erläutert. Dabei zeigen:
Figur 1 eine Teilaufsicht auf einen erfindungsgemäßen Schichtstoff in teilweiser Schnittdarstellung und zwar aufgesetzt auf ein Blech, das beispielsweise eine Trennwand innerhalb eines Kraftfahrzeugs ist;
Figur 1a ein Schema zur Veranschaulichung der Löcherstruktur;
Figur 2 ein vergrößertes Schnittbild aus einem Teil eines erfindungsgemäßen Schichtstoffs;
Figur 3 ein vergrößertes Schnittbild aus einem anderen erfindungsgemäßen Schichtstoff;
Figur 4 ein weiteres Schnittbild aus einer weiteren alternativen Ausbildungsform,
Figur 5 ein weiteres Schnittbild durch eine andere Ausbildungsform des erfindungsgemäßen Schichtstoffs und
Figur 6 ein Schnittbild durch eine weitere Ausbildung.

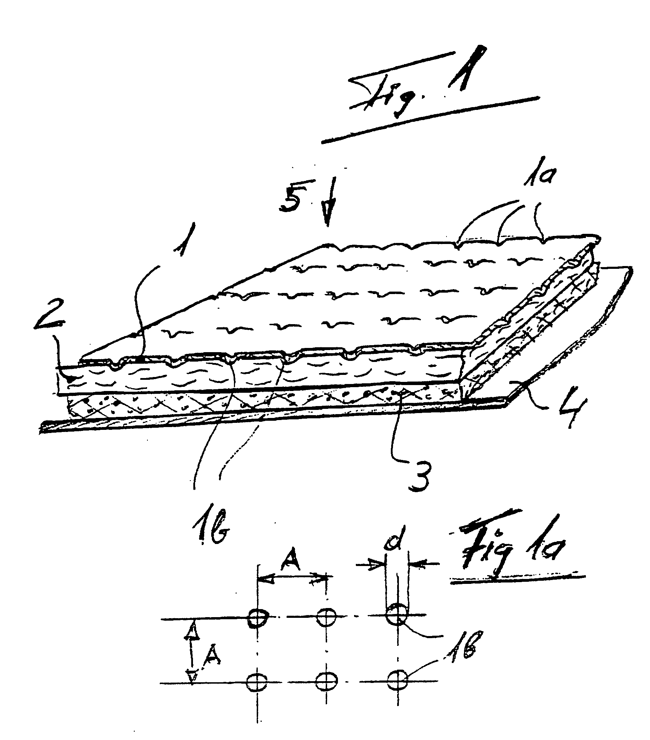

Gemäß Figur 1 weist der Schichtstoff eine Abstandschicht 2 auf, die hier als Vlies aus Polyesterfäden mit einem spezifischen Gewicht von 0,01 g/cm³ ausgebildet ist. Die Abstandschicht 2 ist oben, das heißt aus der Richtung des einfallenden Schalls 5, mit einer dünnen Aluminiumfolie einer Schichtdicke von 0,1 mm derart versehen, daß diese Deckschicht 1 in regelmäßigen Abständen mit punktartigen oder nach innen gerichteten warzenartigen Vertiefungen 1a versehen ist, wodurch sich die Struktur mit den Vertiefungen 1a von der Außenseite her ergibt. Die Vertiefungen 1a der Deckschicht 1 sind auch ein Stück weit in die Abstandschicht 2 hineingedrückt, was sogar zu einer verbesserten Verbindung zwischen diesen Schichten führt. Die Vertiefungen 1a sind jeweils in ihrem Zentrum mit einer als Loch mit einem Durchmesser d von ca. 1,5 mm ausgebildeten Durchbrechung 1b versehen. Eine besonders gute akustische Absorption wird mit einer Löcherstruktur erreicht, bei der der Abstand A benachbarte Durchbrechungen 1b gemäß Figur 1a ca. 5 mm beträgt. Dies entspricht einem Verhältnis der von den Durchbrechungen gebildeten Fläche zur Gesamtfläche der Deckschicht von ca. 7 %, doch sind die Absorptionsergebnisse auch im Bereich zwischen 3 und 12 %, insb. zwischen 5 und 9 % günstig. An der anderen Seite ist die Abstandschicht 2 mit einer Schwerschicht 3, bestehend aus POE versehen. Dieses aus den drei Schichten (Deckschicht 1, Abstandschicht 2 und Schwerschicht 3) gebildete Schichtstoffelement kann als verhältnismäßig großflächige Platte (einige Quadratmeter Fläche) hergestellt und sowohl während als auch zu einem gewissen Umfang noch nach der Herstellung bleibend verformt werden.

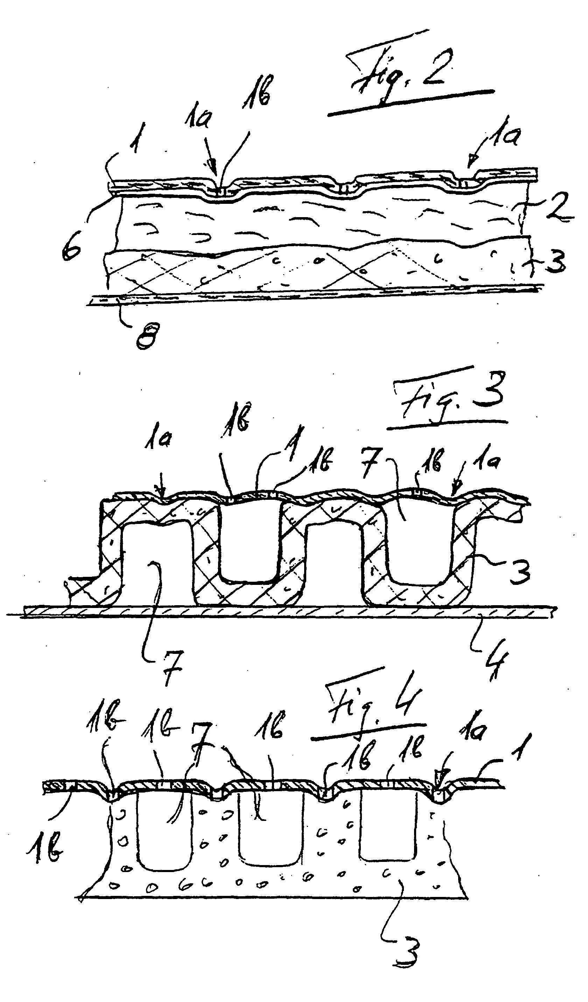

Bei dem Ausführungsbeispiel von Figur 2 ist die Deckschicht 1 aus Aluminium über eine Polyester-Thermoplast-Verbindungsschicht 6 mit der Vliesstoffschicht verbunden, welche die Abstandschicht 2 bildet. In den Bereichen der im wesentlichen punktförmigen Vertiefungen 1a ist sie mit Löchern als Durchbrechungen 1b versehen. Bei diesem Ausführungsbeispiel besteht die Schwerschicht 3 aus Polyolefin-Elastomer (POE); sie ist an der freien Oberfläche mit einem Abdeckvlies 8 aus PES abgedeckt.

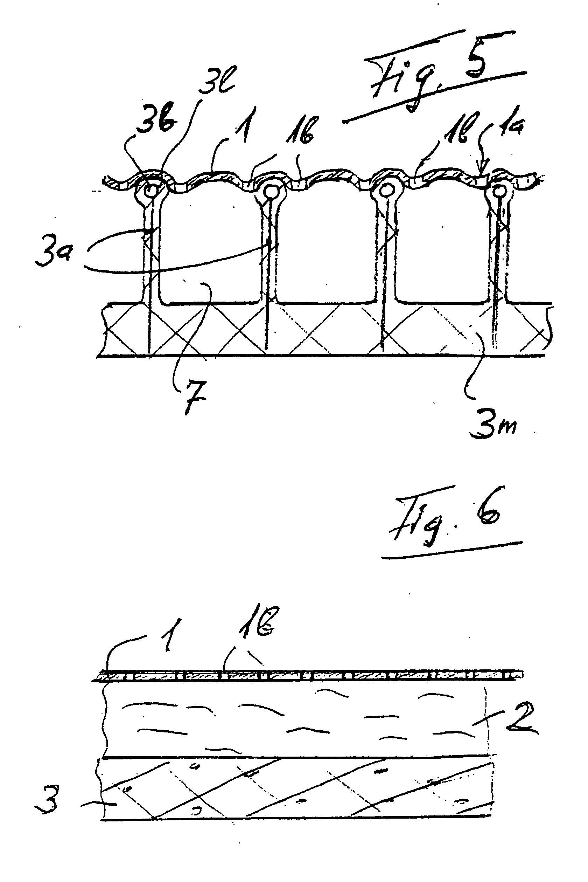

Bei dem Ausführungsbeispiel von Figur 3 ist die Schwerschicht 3 als sogenannte "Schwerfolie" ausgebildet. Sie besteht aus POE und ist durch einen Tiefzieh-Verformungsvorgang mit einem System von in der Schichtstoff-Ebene nebeneinanderliegenden Kammern 7 versehen, so daß die Schwerschicht 3 gleichzeitig auch die Aufgabe der "Absorberschicht" und als "Abstandschicht" übernimmt und eine zusätzliche Abstandschicht eingespart werden kann, was auch Entsorgungsprobleme vermeiden hilft. Die Deckschicht 1 besteht hier gleichfalls aus einer dünnen Aluminiumfolie, welche mit einer durch sich kreuzende wellenförmige Vertiefungen 1a gebildete Profilstruktur und mit der Löcherstruktur versehen ist.

Bei dem Ausführungsbeispiel von Figur 4 besteht die Schwerschicht 3 aus Schwerschaum, nämlich mit Schwerspat gefülltem PUR-Schwerschaum mit einem spezifischen Gewicht des Schaummaterials von 2 g/cm³. Auch hier sind nach oben zur Deckschicht 1 geöffnete zylinderartige bzw. rechteckförmige Kammern 7 gebildet, wodurch die Schwerschicht 3 im Bereich dieser Kammern 7 als "Abstandschicht" wirkt. Auch hier ist die Deckschicht 1 aus Aluminiumfolie mit einer Fülle von Vertiefungen 1a und Durchbrechungen 1b in Form eines entsprechenden Präge-Loch-Musters versehen.

Bei dem Ausführungsbeispiel von Figur 5 erfolgt die Herstellung der Kammertrennwände dadurch, daß eine flach aufgespannte Schwerfolie 3 mittels Vakuum durch ein netz- oder siebartiges Werkzeug so hindurchgezogen und an die Wand eines Formnestes angesaugt wird, daß die Drähte (hier durch 3b angedeutet) Materialteile 3b der Schwerschicht oberhalb der Drähte zurückhalten, während der Hauptteil 3m der Schwerfolie unter Bildung der Materialstege 3a nach unten gesaugt bzw. gezogen wird. An den in Figur 5 nach oben weisenden Enden der Materialstege 3a ist die Deckschicht 1 an die die Drähte überdeckenden Schwerfolien-Materialteile 3b angeschmolzen. Die Deckschicht 1 ist wiederum mit Vertiefungen 1a und mit Durchbrechungen 1b versehen, so daß sich oberflächlich die unebene und perforierte Struktur ergibt.

Sämtliche Schichten des Schichtstoffs sind unter sich, ggf. mittels einer Haft- oder Verbindungsschicht verbunden; dabei findet vor allem die Verpreßtechnik und/oder Klebe- bzw. Schmelztechnik Anwendung.

In Figur 6 wird die im wesentlichen ebene Deckschicht 1, die mit kleinen Löchern bzw. Durchbrechungen 1b versehen ist, von der fasrigen Abstandschicht 2 im Abstand von der Schwerschicht 3 gehalten.

## Patentansprüche

1. Schall dämpfender, dämmender und/oder absorbierender Schichtstoff mit einer Deckschicht (1) und mit einer Schwerschicht (3) sowie einer Hohlräume aufweisenden Abstandschicht (2) zwischen Deckschicht (1) und Schwerschicht (3),
**dadurch gekennzeichnet,**
**daß** die Schwerschicht (3) aus Schwerschaum oder einer Schwerfolie besteht und
**daß** die Deckschicht (1) mit einer zahlreiche Durchbrechungen (1b) aufweisenden Löcherstruktur versehen und mit der Abstandschicht (2) und der Schwerschicht (3) zu einer eigensteifen, aber biegbaren Schichtstoffplatte (5) verpreßt und/oder verschmolzen ist.

2. Schichtstoff nach Anspruch 1,
**dadurch gekennzeichnet,**
**daß** die Löcherstruktur in der Deckschicht (1) ein Muster von Durchbrechungen (1b) aufweist, die einen Abstand A (von Nachbardurchbrechungen) zwischen 2,5 und 8 mm und ein Flächenverhältnis der Flächen der Durchbrechungen (1b) zur Gesamtfläche zwischen 4 und 20 % aufweisen.

3. Schichtstoff nach Anspruch 2,
**dadurch gekennzeichnet,**
**daß** der Abstand A der Durchbrechungen (1b) zwischen 4 und 6 mm beträgt und das Flächenverhältnis zwischen 5 und 9 % beträgt.

4. Schichtstoff nach einem der vorhergehenden Ansprüche,
**dadurch gekennzeichnet,**
**daß** die Deckschicht (1) eine zahlreiche Vertiefungen (1a) aufweisende Profilstruktur aufweist.

5. Schichtstoff nach einem der vorhergehenden Ansprüche,
**dadurch gekennzeichnet ,**
**daß** die Deckschicht (1) aus einer Aluminiumfolie einer Schichtdicke zwischen 0,05 und 0,50 mm besteht.

6. Schichtstoff nach Anspruch 5,
**dadurch gekennzeichnet,**
**daß** die der Abstandschicht (2) zugewandte Seite der Deckschicht (1) mit einer dünnen Thermoplastschicht (6) überzogen ist.

7. Schichtstoff nach einem der vorhergehenden Ansprüche,
**dadurch gekennzeichnet,**
**daß** die Abstandschicht (2) aus einer Vliesschicht einer Schichtdicke zwischen 1 und 50 mm besteht.

8. Schichtstoff nach Anspruch 7,
**dadurch gekennzeichnet,**
**daß** die Abstandschicht (2) Polyesterfäden aufweist.

9. Schichtstoff nach Anspruch 7,
**dadurch gekennzeichnet,**
**daß** die Abstandschicht (2) Baumwollfäden aufweist.

10. Schichtstoff nach Anspruch 7,
**dadurch gekennzeichnet,**
**daß** die Abstandschicht (2) Glasfäden aufweist.

11. Schichtstoff nach Anspruch 7,
**dadurch gekennzeichnet,**
**daß** die Abstandschicht (2) Aluminium und/oder Edelstahlfäden aufweist.

12. Schichtstoff nach einem der vorhergehenden Ansprüche, **dadurch gekennzeichnet, daß** die Abstandschicht (2) aus einer porösen bzw. offenzelligen Weichschaumschicht besteht.

13. Schichtstoff nach Anspruch 11,
**dadurch gekennzeichnet,**
**daß** die Abstandschicht (2) aus PUR-Weichschaum besteht.

14. Schichtstoff nach einem der Ansprüche 1-13,
**dadurch gekennzeichnet,**
**daß** die Schwerschicht (3) aus einer Schwerfolie einer Schichtdicke zwischen 0,5 und 10 mm besteht.

15. Schichtstoff nach einem der vorhergehenden Ansprüche,
**dadurch gekennzeichnet,**
**daß** die Abstandschicht (2) durch eine mit Kammern (7) versehene Schwerschicht gebildet ist.

16. Schichtstoff nach Anspruch 15,
**dadurch gekennzeichnet,**
**daß** die Abstandschicht (2) durch Materialstege (3a) einer Schwerfolie gebildet ist.

17. Schichtstoff nach einem der vorhergehenden Ansprüche,
**dadurch gekennzeichnet,**
**daß** die Schwerschicht (3) durch ein Abdeckvlies (8) abgedeckt ist.

18. Schichtstoff nach einem der vorhergehenden Ansprüche,
**dadurch gekennzeichnet,**
**daß** zwischen der Abstandschicht (2) und der Schwerschicht (3) mindestens ein aus einer perforierten Folie und einer weiteren Abstandschicht gebildetes Schichtenpaar eingefügt ist.

## Claims

1. Sound-deadening, sound-insulating and/or sound-absorbing laminate comprising a covering layer (1) and a heavy layer (3) as well as a spacer layer (2) comprising cavities between the covering layer (1) and the heavy layer (3),
**characterized in**
**that** the heavy layer (3) consists of heavy foam or a heavy foil and
**that** the covering layer (1) is provided with a hole structure comprising numerous piercings (1b) and is press-moulded and/or smelted with the covering layer (2) and the heavy layer to form an intrinsically rigid, but flexible laminate plate (5).

2. Laminate according to claim 1,
**characterized in**
**that** the hole structure in the covering layer (1) comprises a pattern of piercings (1b) which have a spacing A (of adjacent piercings) between 2.5 and 8 mm and a surface ratio between the surfaces of the piercings (1b) and the total surface from 4 to 20 %.

3. Laminate according to claim 2,
**characterized in**
**that** the spacing A of the piercings (1b) is between 4 and 6 mm and the surface ratio is between 5 and 9 %.

4. Laminate according to any of the preceding claims,
**characterized in**
**that** the covering layer (1) comprises a profile structure comprising numerous depressions (1a).

5. Laminate according to any of the preceding claims,
**characterized in**
**that** the covering layer (1) consists of an aluminium foil with a layer thickness between 0.05 and 0.50 mm.

6. Laminate according to claim 5,
**characterized in**
**that** the side of the covering layer (1), which faces towards the spacer layer (2), is coated with a thin thermoplastic layer (6).

7. Laminate according to any of the preceding claims,
**characterized in**
**that** the spacer layer (2) consists of a fleece layer with a layer thickness between 1 and 50 mm.

8. Laminate according to claim 7,
**characterized in**
**that** the spacer layer (2) comprises polyester threads.

9. Laminate according to claim 7,
**characterized in**
**that** the spacer layer (2) comprises cotton threads.

10. Laminate according to claim 7,
**characterized in**
**that** the spacer layer (2) comprises glass threads.

11. Laminate according to claim 7,
**characterized in**
**that** the spacer layer (2) comprises aluminium and/or stainless steel threads.

12. Laminate according to any of the preceding claims,
**characterized in**
**that** the spacer layer (2) consists of a porous or, respectively, an open-cell soft foam layer.

13. Laminate according to claim 11,
**characterized in**
**that** the spacer layer (2) consists of PUR soft foam.

14. Laminate according to any of claims 1 - 13,
**characterized in**
**that** the heavy layer (3) consists of a heavy foil with a layer thickness between 0.5 and 10 mm.

15. Laminate according to any of the preceding claims,
**characterized in**
**that** the spacer layer (2) is constituted by a heavy layer provided with chambers (7).

16. Laminate according to claim 15,
**characterized in**
**that** the spacer layer (2) is constituted by material webs (3a) of a heavy foil.

17. Laminate according to any of the preceding claims,
**characterized in**
**that** the heavy layer (3) is covered by a covering fleece (8).

18. Laminate according to any of the preceding claims,
**characterized in**
**that** at least one pair of layers constituted by a perforated foil and a further spacer layer is inserted between the spacer layer (2) and the heavy layer (3).

## Revendications

1. Stratifié insonorisant, insonore et/ou absorbant le son, comprenant une couche de recouvrement (1) et une couche lourde (3) ainsi qu'une couche d'écartement (2) entre la couche de recouvrement (1) et la couche lourde (3),
**caractérisé en ce**
**que** la couche lourde (3) consiste en une mousse lourde ou en une feuille lourde et
**que** la couche de recouvrement (1) est prévue d'une structure de trous comprenant de nombreux perçages (1b) et est injectée et/ou fusionnée avec la couche d'écartement (2) et la couche lourde (3) pour former une plaque de stratifié (5) intrinsiquement rigide, mais pliable.

2. Stratifié selon la revendication 1,
**caracterisé en ce**
**que** la structure de trous dans la couche de recouvrement (1) comprend un modèle de perçages (1b) comprenant un écartement A (de perçages voisins) entre 2,5 et 8 mm et un rapport de surface entre les surfaces des perçages (1b) et la surface totale de 4 à 20 %.

3. Stratifié selon la revendication 2,
**caractérisé en ce**
**que** l'écartement A des perçages (1b) fait entre 4 et 6 mm et le rapport de surface fait entre 5 et 9 %.

4. Stratifie selon l'une des revendications précédentes,
**caractérisé en ce**
**que** la couche de recouvrement (1) comprend une structure de profilé comprenant de nombreux enfoncements (1a).

5. Stratifié selon l'une des revendications précédentes,
**caractérisé en ce**
**que** la couche de recouvrement (1) consiste en une feuille d'aluminium ayant une épaisseur de couche entre 0,05 et 0,50 mm.

6. Stratifié selon la revendication 5,
**caractérisé en ce**
**que** la face de la couche de recouvrement (1) vis-à-vis de la couche d'écartement (2) est recouverte d'une mince couche thermoplastique (6).

7. Stratifié selon l'une des revendications précédentes.,
**caractérisé en ce**
**que** la couche d'écartement (2) consiste en une couche de voile ayant une épaisseur de couche entre 1 et 50 mm.

8. Stratifié selon la revendication 7,
**caractérisé en ce**
**que** la couche d'écartement (2) comprend des fils en polyester.

9. Stratifié selon la revendication 7,
**caractérisé en ce**
**que** la couche d'écartement (2) comprend des fils en coton.

10. Stratifié selon la revendication 7,
**caractérisé en ce**
**que** la couche d'écartement (2) comprend des fils en verre.

11. Stratifié selon la revendication 7,
**caractérisé en ce**
**que** la couche d'écartement (2) comprend des fils en aluminium et/ou acier inoxydable.

12. Stratifié selon l'une des revendications précédentes,
**caractérisé en ce**
**que** la couche d'écartement (2) consiste en une couche de mousse souple poreuse ou, respectivement, à alvéoles ouvertes.

13. Stratifié selon la revendication 11,
**caractérisé en ce**
**que** la couche d'écartement (2) consiste en une mousse souple PUR.

14. Stratifié selon l'une des revendications 1 - 13,
**caractérisé en ce**
**que** la couche lourde (3) consiste en une feuille lourde ayant une épaisseur de couche entre 0,5 et 10 mm.

15. Stratifié selon l'une des revendications précédentes,
**caractérisé en ce**
**que** la couche d'écartement (2) est constituée par une couche lourde prévue de chambres (7).

16. Stratifié selon la revendication 15,
**caractérisé en ce**
**que** la couche d'écartement (2) est constituée par des talons de matériau d'une feuille lourde (3a).

17. Stratifié selon l'une des revendications précédentes,
**caractérisé en ce**
**que** la couche lourde (3) est couverte d'un voile de recouvrement (8).

18. Stratifié selon l'une des revendications précédentes,
**caractérisé en ce**
**qu'**au moins une paire de couches constituée d'une feuille perforée et d'une autre couche de recouvrement est insérée entre la couche d'écartement (2) et la couche lourde (3).
